# EUROPÄISCHE PATENTSCHRIFT

(11) **EP 1 398 217 B1**
(45) Veröffentlichungstag und Bekanntmachung des Hinweises auf die Patenterteilung: **02.03.2005**
(21) Anmeldenummer: 03018658.9
(22) Anmeldetag: 21.08.2003
(51) Int. Cl.: B60R 7/02

(54) **Deckel für ein Ablagefach in einem Fahrzeug**
Lid for storage compartment in a vehicule
Couvercle de receptacle dans un véhicule

(30) Priorität: 11.09.2002 DE 10242470
(43) Veröffentlichungstag der Anmeldung: 17.03.2004
(73) Patentinhaber: DaimlerChrysler AG, 70567 Stuttgart (DE)
(72) Erfinder: Mattedi, Markus, 72141 Walddorfhäslach (DE); Özkolacik, Mahir, 70771 Leinfelden-Echterdingen (DE); Thiesen, Dirk, 83135 Schechen (DE)

(56) Entgegenhaltungen:
- EP-A- 0 545 436
- WO-A-93/18264
- DE-B- 1 161 163
- DE-U- 9 107 572
- US-A- 4 539 828
- US-A- 4 926 762

## Beschreibung

Die Erfindung betrifft einen Deckel für ein Ablagefach in einem Kraftfahrzeug gemäß der im Oberbegriff von Anspruch 1 näher definierten Art. Des weiteren betrifft die Erfindung ein Ablagefach für ein Kraftfahrzeug, eine Inneneinrichtung für ein Nutzfahrzeug und ein Armaturenbrett für einen PKW.

Ablagefächer gehören bereits seit langem zur Serienausstattung von Fahrzeugen und damit zum allgemeinen Stand der Technik. Nur beispielhaft wird daher auf die gattungsgemäße DE 43 02 948 A1 verwiesen.

Derartige Ablage- bzw. Handschuhfächer können, nachdem ein Unbefugter in das Kraftfahrzeug eingedrungen ist, relativ leicht geöffnet werden, so dass sie keine wirklich sichere Aufbewahrung von Gegenständen ermöglichen. Gerade bei LKWs passiert es in letzter Zeit häufiger, dass vermeintlich sichere Ablagefächer von Dieben leergeräumt werden, während der Fahrer sich im Schlafraum des LKW befindet.

Dieses Problem ist erkannt worden und die DE 29 16 038 A1 schlägt zu dessen Behebung einen Wertbehälter vor, der ein von einer bestimmten Raumposition unabhängig handhabbares Tragbehältnis darstellt. Ähnliche Lösungen sind auch in der DE 84 30 567 U1 sowie der DE 42 28 921 A1 beschrieben.

Problematisch bei sämtlichen dieser bekannten Wertbehälter ist jedoch, dass sie zum nachträglichen Einbau in das Fahrzeug vorgesehen und deshalb nicht sehr praxistauglich sind. Ein weiterer Nachteil sind die meist sehr hohen Kosten solcher Wertbehälter und die außerordentlich große Platzverschwendung, die durch dieselben erzeugt wird.

Aus der EP 0 545 436 A1 weiterhin ist ein für den nachträglichen Einbau vorgesehener Deckel für ein Wandgeldschrank bekannt. Der Deckel hat eine Verschlussklappe mit einer Schließeinrichtung, die ein Schloss und einen beweglichen Riegel aufweist. Ein metallischer Hilfsrahmen wird offenbart, an dem ein Scharnier angebracht ist und über den der Deckel an einer festen Struktur anbringbar ist. Der Riegel ist hierbei jedoch an der beweglichen Verschlussklappe und nicht am Hilfsrahmen gelagert, wodurch die Verschlussklappe schwerer wird und sich dadurch weniger für den Gebrauch und die Befestigung an einem Ablagefach eines Kraftfahrzeuges eignet.

Es ist daher Aufgabe der vorliegenden Erfindung, einen Deckel für ein Ablagefach in einem Kraftfahrzeug zu schaffen, der die Integration eines Ablagefaches in das Interieur eines Kraftfahrzeugs erleichtert und dabei eine erhöhte Sicherheit gegen Diebstahl bietet.

Erfindungsgemäß wird diese Aufgabe durch die in Anspruch 1 genannten Merkmale gelöst.

Die erfindungsgemäße Ausführung des wenigstens einen Riegels und des wenigstens einen Scharniers aus einem metallischen Material stellt sicher, dass der erfindungsgemäße Deckel nicht in einfacher Weise durch äußere Gewalteinwirkung geöffnet werden kann. Vielmehr handelt es sich hierbei um eine sehr stark einbruchshemmende Ausgestaltung des Deckels. Zur Verhinderung eines einfachen Einbruchs in das Ablagefach, in welchem der erfindungsgemäße Deckel angebracht ist, trägt auch die metallische Platte der Verschlussklappe bei. Diese verhindert nämlich, dass die ansonsten aus einem einfachen Kunststoffmaterial bestehende Verschlussklappe mit spitzen Gegenständen durchstoßen und somit zerbrochen werden kann.

Des weiteren kann der erfindungsgemäße Deckel über seinen Hilfsrahmen an einer festen Struktur des Kraftfahrzeugs angebracht werden, so dass es vorteilhafterweise auch nicht möglich ist, den gesamten Deckel von dem Ablagefach wegzureißen oder in anderer Weise unerlaubt zu entfernen. Der Hilfsrahmen ermöglicht in diesem Zusammenhang eine einfache Integration bzw. Anbringung des Deckels im Innenraum eines Kraftfahrzeugs, die zur Einsparung von Platz beiträgt. Ein weiterer großer Vorteil ist dabei die einfache Handhabung des Deckels sowohl bei der Montage als auch bei der späteren Benutzung.

Wenn in einer vorteilhaften Weiterbildung der Erfindung die metallische Platte der Verschlussklappe zumindest an ihrer dem Hilfsrahmen abgewandten Seite verkleidet ist, so ist eine noch bessere Integration des Deckels in die Inneneinrichtung des Kraftfahrzeugs gegeben.

Ein Ablagefach mit dem erfindungsgemäßen Deckel ergibt sich aus Anspruch 5.

Eine Inneneinrichtung für Nutzfahrzeuge ist Anspruch 7 und ein Armaturenbrett für einen PKW ist Anspruch 8 zu entnehmen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Dabei zeigen:
- Fig. 1: einen erfindungsgemäßen Deckel in einer perspektivischen Ansicht;
- Fig. 2: den Deckel aus Fig. 1 in einer Vorderansicht; und
- Fig. 3: eine Dachablage eines LKW mit dem erfindungsgemäßen Ablagefach.

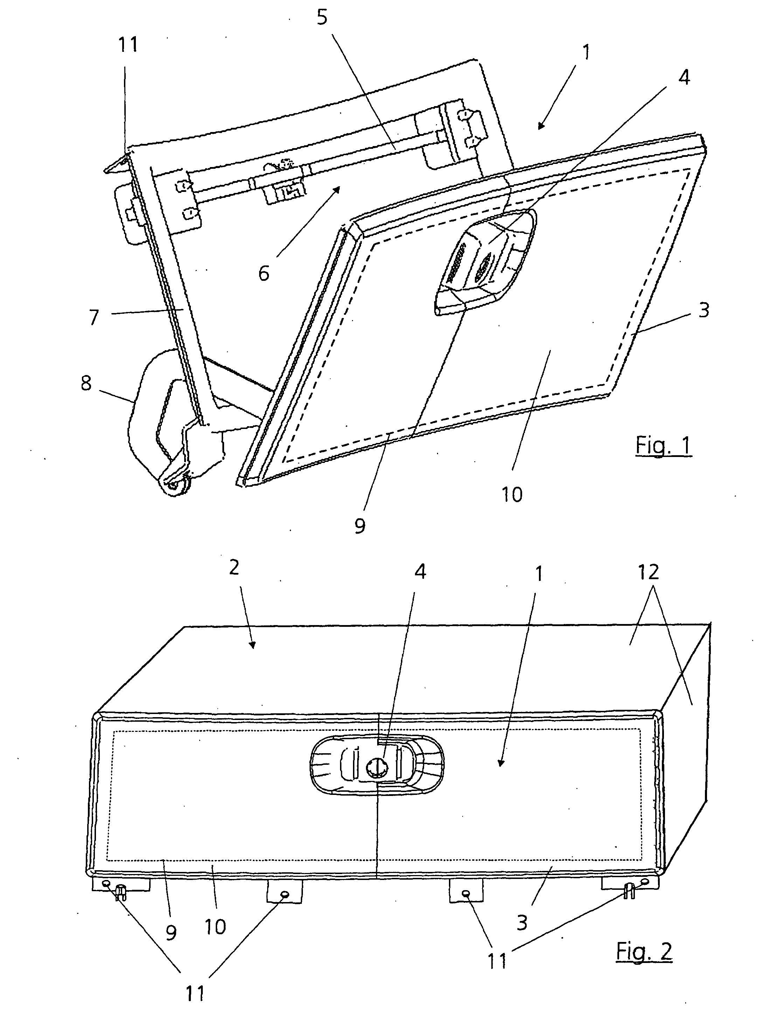

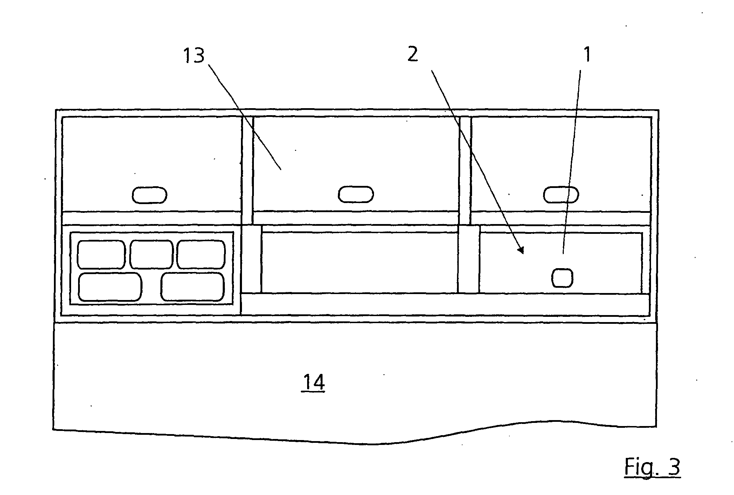

Fig. 1 zeigt einen Deckel 1, welcher zum Verschließen eines in Fig. 2 angedeuteten Ablagefaches 2 dient. Der Deckel 1 weist eine Verschlussklappe 3 auf, an welcher ungefähr in der Mitte ein Schloss 4 angebracht ist, welches von an sich bekannter Bauart sein kann. Das mit einem nicht dargestellten Schlüssel abschließbare Schloss 4 wirkt auf einen Riegel 5 und bildet mit demselben eine Schließeinrichtung 6, welche ein Verschließen des Deckels 1 gegenüber dem Ablagefach 2 ermöglicht. Zum Schließen hintergreift der Riegel 5 in an sich bekannter Weise beiderseits eine in Fig. 1 nicht dargestellte feste Struktur, die in diesem Bereich verstärkt sein kann. Das Öffnen des Schlosses 4 kann in an sich bekannter Weise durch seitliches Drücken erfolgen.

Der Riegel 5 ist an einem Hilfsrahmen 7 angebracht, an welchem außerdem die Verschlussklappe 3 über zwei Scharniere 8 gelenkig gelagert ist, so dass ein Verschwenken der Verschlussklappe 3, im vorliegenden Fall nach unten, ermöglicht wird. Aufgrund der perspektivischen Darstellung ist in Fig. 1 nur eines der Scharniere 8 erkennbar.

Um zu verhindern, dass der Deckel 1 in einfacher Weise von Unbefugten aufgebrochen werden kann, bestehen der Riegel 5 und die beiden Scharniere 8 aus einem metallischen Material, vorzugsweise aus Stahl. Des weiteren weist die Verschlussklappe 3 eine lediglich durch gestrichelte Linien angedeutete metallische Platte 9 auf, welche mit einer Verkleidung 10 versehen ist. Die Verkleidung 10 dient zur besseren Integration des Deckels 1 in eine Inneneinrichtung des Kraftfahrzeugs und kann demnach aus Kunststoff, Leder, Holz oder einem anderen geeigneten Material bestehen. Im Regelfall wird die Verkleidung 10 als Umschäumung ausgeführt sein. Bei geschlossenem Deckel 1 ist aufgrund der Verkleidung 10 nicht erkennbar, dass dieser diebstahlhemmend ausgeführt ist. Statt der vollständigen Verkleidung 10 könnte die metallische Platte 9 der Verschlussklappe 3 auch lediglich an ihrer dem Hilfsrahmen 7 abgewandten Seite verkleidet sein.

Auch der Hilfsrahmen 7 besteht aus einem metallischen Material, vorzugsweise aus Stahl, so dass es auch hier verhältnismäßig schwer ist, denselben aufzubrechen. Der Hilfsrahmen 7 ist des weiteren mit mehreren Bohrungen 11 versehen, die zur Verbindung des Deckels 1 mit einer in Fig. 3 dargestellten festen Struktur des Kraftfahrzeugs dienen. Die Bohrungen 11 sind so in dem Hilfsrahmen 7 angeordnet, dass sie bei geschlossener Verschlussklappe 3 verdeckt und von außen weder sichtbar noch zugänglich sind.

In Fig. 2 ist das Ablagefach 2 dargestellt, welches neben dem oben beschriebenen Deckel 1 mehrere im vorliegenden Fall aus Kunststoff bestehende Gehäusewandungen 12 aufweist, so dass ein allseitig geschlossenes Ablagefach 2 entsteht. Die Gehäusewandungen 12 bilden jedoch kein autarkes Ablagefach 2 sondern sind Teil einer festen Struktur, wie aus Fig. 3 hervorgeht.

Dort ist eine Dachablage 13 dargestellt, die sich oberhalb einer Windschutzscheibe 14 des Kraftfahrzeugs, vorzugsweise eines LKW, befindet. In der als feste Struktur dienenden Dachablage 13 ist das Ablagefach 2 integriert, indem die Gehäusewandungen 12 durch das Material der Dachablage 13 gebildet sind. Das Ablagefach 2 entsteht somit durch das Anbringen des Deckels 1 an einem zuvor an seiner Vorderseite geöffneten Fach, welches Platz für die verschiedensten Gegenstände bietet. Im vorliegenden Fall befindet sich das Ablagefach 2 auf der rechten Seite des Kraftfahrzeugs. Abhängig von weiteren Einbauteilen der Dachablage 13 oder auch von der Anordnung des Lenkrads wäre auch eine Anbringung des Ablagefaches 2 an einem anderen Ort denkbar.

Statt an der Dachablage 13 eines LKW könnte der Deckel 1 auch zum Verschließen eines Handschuhfachs in einem PKW dienen und müsste hierzu lediglich mit einem nicht dargestellten Armaturenbrett verbunden werden, welches dann als feste Struktur dienen würde.

## Patentansprüche

1. Deckel (1) für ein Ablagefach in einem Kraftfahrzeug, mit einer Verschlussklappe (3), mit einer Schließeinrichtung (6), welche wenigstens ein Schloss (4) und wenigstens einen beweglichen Riegel (5) aufweist, und mit wenigstens einem Scharnier (8),
**dadurch gekennzeichnet, dass**
der wenigstens eine Riegel (5) und das wenigstens eine Scharnier (8) aus einem metallischen Material bestehen, dass die Verschlussklappe (3) eine metallische Platte (9) aufweist, und dass ein metallischer Hilfsrahmen (7) vorgesehen ist, an welchem das wenigstens eine Scharnier (8) und der wenigstens eine Riegel (5) angebracht sind und über welchen der Deckel (1) an einer festen Struktur (13) des Kraftfahrzeugs anbringbar ist.

2. Deckel nach Anspruch 1,
**dadurch gekennzeichnet, dass**
die metallische Platte (9) der Verschlussklappe (3) zumindest an ihrer dem Hilfsrahmen (7) abgewandten Seite verkleidet ist.

3. Deckel nach Anspruch 1 oder 2,
**dadurch gekennzeichnet, dass**
das metallische Material des Riegels (5), des Scharniers (8), der Platte (9) und des Hilfsrahmens (7) Stahl ist.

4. Deckel nach Anspruch 1, 2 oder 3,
**dadurch gekennzeichnet, dass**
der Hilfsrahmen (7) mit Bohrungen (11) zur Verbindung mit der festen Struktur (13) versehen ist, welche derart angeordnet sind, dass sie bei geschlossener Verschlussklappe (3) verdeckt sind.

5. Ablagefach für ein Kraftfahrzeug mit mehreren Gehäusewandungen (12) und mit einem Deckel (1) nach einem der Ansprüche 1 bis 4.

6. Ablagefach nach Anspruch 5,
**dadurch gekennzeichnet, dass**
die Gehäusewandungen (12) aus Kunststoff bestehen.

7. Inneneinrichtung für ein Nutzfahrzeug, insbesondere einen LKW, mit einer oberhalb einer Windschutzscheibe (14) angeordneten Dachablage (13) in welcher sich ein Ablagefach (2) nach Anspruch 5 oder 6 befindet.

8. Armaturenbrett für einen PKW mit einem Ablagefach (2) nach Anspruch 5 oder 6.

## Claims

1. Lid (1) for a stowage compartment in a motor vehicle, with a closing flap (3), a locking device (6) incorporating at least one lock (4) and at least one displaceable lock bolt (5), and having at least one hinge (8),
**characterised in that**
the at least one lock bolt (5) and the at least one hinge (8) are made from a metal material, the closing flap (3) has a metal plate (9), and a metal auxiliary frame (7) is provided, on which the at least one hinge (8) and the at least one lock bolt (5) are mounted and by means of which the lid (1) can be mounted on a fixed structure (13) of the motor vehicle.

2. Lid as claimed in claim 1,
**characterised in that**
the metal plate (9) of the closing flap (8) is faced, at least on its side remote from the auxiliary frame (7).

3. Lid as claimed in claim 1 or 2,
**characterised in that**
the metal material of the lock bolt (5), the hinge (8), the plate (9) and the auxiliary frame (7) is steel.

4. Lid as claimed in claim 1, 2 or 3,
**characterised in that**
the auxiliary frame (7) is provided with bores (11) to enable a connection to the fixed structure (13), which are disposed so that they are covered when the closing flap (3) is closed.

5. Stowage compartment for a motor vehicle with several housing walls (12) and a lid (1) as claimed in one of claims 1 to 4.

6. Stowage compartment as claimed in claim 5,
**characterised in that**
the housing walls (12) are made from plastic.

7. Interior accessory for a utility vehicle, in particular a heavy goods vehicle, with a roof compartment (13) disposed above a windscreen, in which a stowage compartment (2) as claimed in claim 5 or 6 is disposed.

8. Instrument panel for a heavy goods vehicle incorporating a stowage compartment (2) as claimed in claim 5 or 6.

## Revendications

1. Couvercle (1) pour un vide-poches dans un véhicule, avec un clapet de fermeture (3), avec un dispositif de fermeture (6), lequel comporte au moins une serrure (4) et au moins un verrou (5) mobile, et avec au moins une charnière (8), **caractérisé en ce que** le au moins un verrou (5) et la au moins une charnière (8) se composent d'un matériau métallique, **en ce que** le clapet de fermeture (3) comporte une plaque métallique (9), et **en ce qu'**un faux-châssis métallique (7) est prévu sur lequel sont disposés la au moins une charnière (8) et le au moins un verrou (5) et au moyen duquel le couvercle (1) peut être disposé sur une structure solide (13) du véhicule.

2. Couvercle selon la revendication 1, **caractérisé en ce que** la plaque métallique (9) du clapet de fermeture (3) est couverte au moins sur sa face se trouvant à l'opposé du faux-châssis (7).

3. Couvercle selon la revendication 1 ou 2, **caractérisé en ce que** le matériau métallique du verrou (5), de la charnière (8), de la plaque (9) et du faux-châssis (7) est de l'acier.

4. Couvercle selon la revendication 1, 2, ou 3, **caractérisé en ce que** le faux-châssis (7) est pourvu de perçages (11) afin d'être relié à la structure solide (13), lesquels sont disposés de sorte qu'ils soient recouverts lorsque le clapet de fermeture (3) est fermé.

5. Vide-poches pour un véhicule avec plusieurs parois (12) et avec un couvercle (1) selon l'une des revendications 1 à 4.

6. Vide-poches selon la revendication 5, **caractérisé en ce que** les parois (12) sont composées de matière plastique.

7. Dispositif interne pour un véhicule utilitaire, notamment un camion, avec un réceptacle de toit (13) disposé au-dessus d'un pare-brise (14), dans lequel se trouve un vide-poches (2) selon la revendication 5 ou 6.

8. Tableau de bord pour une voiture avec un vide-poches (2) selon la revendication 5 ou 6.
